# EUROPÄISCHE PATENTSCHRIFT

(11) **EP 4 226 077 B1**
(45) Veröffentlichungstag und Bekanntmachung des Hinweises auf die Patenterteilung: **25.06.2025**
(21) Anmeldenummer: 21766473.9
(22) Anmeldetag: 25.08.2021
(51) Int. Cl.: F21S 41/29, G02B 7/02

(54) **BELEUCHTUNGSVORRICHTUNG FÜR EINEN KRAFTFAHRZEUGSCHEINWERFER**
LIGHTING DEVICE FOR A MOTOR VEHICLE HEADLIGHT
DISPOSITIF D'ÉCLAIRAGE POUR UN PHARE DE VÉHICULE AUTOMOBILE

(30) Priorität: 06.10.2020 EP 20200332
(43) Veröffentlichungstag der Anmeldung: 16.08.2023
(73) Patentinhaber: ZKW Group GmbH, 3250 Wieselburg (AT)
(72) Erfinder: ARTNER, Martin, 3672 Maria Tafler (AT)
(74) Vertreter: Patentanwaltskanzlei Matschnig & Forsthuber OG
(86) Internationale Anmeldenummer: PCT/EP2021/073517
(87) Internationale Veröffentlichungsnummer: WO 2022/073683

(56) Entgegenhaltungen:
- EP-A1- 2 133 721
- CZ-A3- 2 013 981
- DE-A1- 102007 052 985
- DE-A1- 102014 000 474
- DE-A1- 102017 106 864
- DE-A1- 102018 101 983

## Beschreibung

Die Erfindung betrifft eine Beleuchtungsvorrichtung für einen Kraftfahrzeugscheinwerfer, umfassend:
- ein Leuchtmittel zur Erzeugung und Abstrahlung von Licht, wobei das Leuchtmittel dazu eingerichtet ist, ein in einer Lichtbildebene liegendes Lichtbild zu erzeugen,
- ein optisches Element zur Bildung einer Lichtverteilung aus dem mit dem Leuchtmittel erzeugten Lichtbild, wobei das optische Element in Lichtausbreitungsrichtung nach der Lichtbildebene angeordnet ist und einen Brennpunkt und eine optische Achse aufweist, wobei der Brennpunkt zwischen dem optischen Element und dem Leuchtmittel liegt und die optische Achse zwischen dem optischen Element und dem Leuchtmittel verläuft, wobei das optische Element dazu eingerichtet ist, das Lichtbild in Form einer Lichtverteilung in einen Verkehrsraum abzubilden,
- eine Haltevorrichtung, welche dazu eingerichtet ist, die Position des optischen Elements in Relation zu dem Leuchtmittel dergestalt zu halten, dass, in einem ausgeschalteten Zustand des Leuchtmittels, der Brennpunkt des optischen Elements außerhalb der Lichtbildebene liegt.

Die Erfindung betrifft ferner einen Kraftfahrzeugscheinwerfer, umfassend eine Beleuchtungsvorrichtung.

Beleuchtungsvorrichtungen für Kraftfahrzeugscheinwerfer sind im Stand der Technik bekannt. Beispielsweise zeigt die DE 10 2014 000 474 A1 einen Fahrzeugscheinwerfer, die DE 102018 101 983 A1 offenbart eine Aufnahmeanordnung einer Leuchtweitenstelleinrichtung für ein Lichtmodul in einem Fahrzeugschweinwerfer, und die DE 10 2017 106 864 A1 zeigt ein Lichtmodul für einen Scheinwerfer, welches den Ausgleich von temperaturbedingten Diskrepanzen der Soll-Abstände zwischen der Lichtaussendungsanordnung und den optischen Komponenten eines Lichtmoduls, wie sie bspw. aufgrund einer thermisch induzierten Ausdehnung in dem Lichtmodul auftreten können, erlaubt. Üblicherweise weisen diese ein Leuchtmittel und ein Abbildungssystem auf, welches das Licht des Leuchtmittels in einen Verkehrsraum abbildet. Nachteiligerweise kommt es temperaturbedingt, insbesondere durch die Wärme, die das Leuchtmittel erzeugt, zu einer Erwärmung des Abbildungssystems, was mit einer unerwünschten Wärmeausdehnung des Abbildungssystems einhergeht. Dies kann zu Abbildungsfehlern führen, welche das mit dem Abbildungssystem erzeugte Lichtbild verändern kann.

Um die temperaturbedinge Ausdehnung der Komponenten einer Beleuchtungsvorrichtung zu minimieren, wird im Stand der Technik üblicherweise die Kühlung des Leuchtmittels oder des Abbildungssystems oder eine besonders effiziente Wärmeisolierung des Leuchtmittels oder des Abbildungssystems umgesetzt. Dafür sind jedoch kostenintensive und komplexe Kühlsysteme oder Isoliersysteme notwendig.

Die Aufgabe der vorliegenden Erfindung besteht darin, die Nachteile des Standes der Technik zu lindern bzw. zu beseitigen. Die Erfindung setzt sich daher insbesondere zum Ziel, eine Beleuchtungsvorrichtung zu schaffen, bei welcher die Kompensation der temperaturbedingten Ausdehnungen der Beleuchtungsvorrichtung verbessert wird.

Diese Aufgabe wird durch eine Beleuchtungsvorrichtung mit den Merkmalen von Anspruch 1 gelöst. Bevorzugte Ausführungen sind in den abhängigen Ansprüchen angegeben.

Erfindungsgemäß weist die Haltevorrichtung zumindest ein Ausgleichselement auf, welches das optische Element mit der Haltevorrichtung verbindet, wobei das Ausgleichselement einen ersten Endabschnitt und einen zweiten Endabschnitt aufweist, wobei der erste Endabschnitt mit dem optischen Element und der zweite Endabschnitt mit der Haltevorrichtung verbunden ist, wobei das Ausgleichselement aus einem Material gebildet ist, welches dergestalt ausgebildet ist, dass das Ausgleichselement eine temperaturabhängige Längsausdehnung in einer Richtung (X) aufweist, wobei die Richtung (X) parallel zur optischen Achse des optischen Elements verläuft, wobei das Ausgleichselement mit dem optischen Element dergestalt verbunden und dazu eingerichtet ist, das optische Element in Abhängigkeit einer Temperatur relativ zu der Lichtbildebene derart zu verschwenken und/oder zu verschieben, dass, in einem eingeschalteten Zustand des Leuchtmittels, in welchem eine höhere Temperatur im Vergleich zum ausgeschalteten Zustand vorliegt, der Brennpunkt des optischen Elements innerhalb der Lichtbildebene liegt.

Damit ergibt sich der Vorteil, dass eine Verschiebung des Brennpunkts des optischen Elements, auf Grund einer temperaturbedingten Ausdehnung des optischen Elements, ausgeglichen bzw. kompensiert werden kann. Das optische Element weist einen Brennpunkt bzw. eine Brennlinie auf, wobei das optische Element, wenn der Brennpunkt innerhalb der Lichtbildebene liegt, eine gewünschte bzw. geforderte Lichtverteilung in einen Verkehrsraum abbildet. In einem eingeschalteten Betriebszustand des Leuchtmittels kann es zu einer temperaturbedingten Ausdehnung des optischen Elements kommen, wodurch der Brennpunkt aus der Lichtbildebene geschoben wird. Das Ausgleichselement weist eine derartige temperaturabhängige (oder temperaturbedingte) Längenänderung bzw. Längsausdehnung auf (die Länge des Ausgleichselements ist insbesondere variabel und kann sich mit zunehmender Temperatur in Richtung (X) vergrößern und mit abnehmender Temperatur in Richtung (X) verkleinern), dass es die wärmebedingte Verschiebung des Brennpunkts, insbesondere mit einer entsprechenden Längenänderung, kompensieren kann. Die Verschwenkung bzw. die Verschiebung des optischen Elements wirkt der wärmebedingten Verschiebung des Brennpunkts dergestalt entgegen, dass das optische Element relativ zu dem Leuchtmittel bzw. der Lichtbildebene verschwenkt und/oder verschoben wird, damit nach der Verschiebung bzw. Verschwenkung der Brennpunkt innerhalb der Lichtbildebene liegt. Der Brennpunkt liegt in einem ausgeschalteten Zustand des Leuchtmittels außerhalb der Lichtbildebene, und in einem eingeschalteten Zustand des Leuchtmittels, in welchem eine höhere Temperatur im Vergleich zum ausgeschalteten Zustand vorliegt, durch die Verschwenkung und/oder Verschiebdung des optischen Elements innerhalb der Lichtbildebene liegt. Die Verschiebung des Brennpunkts kann durch die temperaturbedingte Ausdehnung oder die temperaturbedingte Kompression des Ausgleichselement erfolgen. Das Ausgleichselement kann dazu eingerichtet sein, das optische Element dergestalt zu verschwenken und/oder verschieben, dass der Brennpunkt stets, insbesondere bei einer vorliegenden Temperatur oder während bzw. nach einer Temperaturänderung, innerhalb der Lichtbildebene liegt. Mit anderen Worten, kann das Ausgleichselement dergestalt ausgebildet und dazu eingerichtet sein, dass optische Element während einer kontinuierlichen Temperaturänderung, beispielsweise ein, vorzugsweise kontinuierlicher, Temperaturanstieg oder Temperaturabfall, kontinuierlich bzw. dynamisch zu verschwenken und/oder zu verschieben. Das Material des Ausgleichselements kann dergestalt gewählt werden, dass eine temperaturabhängige Längenänderung des Ausgleichselements die Verschiebung des Brennpunkts auf Grund der Erwärmung des optischen Elements kompensiert bzw. ausgleicht. Die Haltevorrichtung kann zwischen dem Leuchtmittel und dem optischen Element angeordnet sein. Das Leuchtmittel kann eine Lichtquelle, beispielsweise eine LED oder eine Laserlichtquelle, aufweisen, und kann Mittel umfassen, welche dazu eingerichtet sind, ein Lichtbild in einer Lichtbildebenen zu erzeugen. Das optische Element kann das Lichtbild in Form einer Lichtverteilung, beispielsweise eine Abblendlichtverteilung, in einen Verkehrsraum abbilden. Das Ausgleichselement kann dergestalt ausgebildet sein, dass eine Temperaturänderung, vorzugsweise eine kontinuierliche Temperaturänderung, eine, vorzugsweise kontinuierliche, Längenänderung des Ausgleichselement hervorruft. Die Länge des Ausgleichselements ist insbesondere eine Funktion der Temperatur. Die Längenänderung auf Grund einer Temperaturänderung kann beispielsweise 0,1 mm - 1 mm, vorzugsweise 0,2 mm - 0,8 mm, pro 10 °C betragen. Das Ausgleichselement kann beispielsweise ein Metall oder einen Kunststoff, vorzugsweise Aluminium, Zinkdruckguss, Polycyclohexylendimethylenterephthalat, Polyphenylenether, Polyamid, Polyvinylchlorid, Polypropylen, umfassen.

Es kann vorgesehen sein, dass die Verschwenkung und/oder Verschiebung des optischen Elements durch die temperaturabhängige Änderung der Längsausdehnung des Ausgleichselement eine Verschwenkung des optischen Elements um eine y-Achse und/oder um eine z-Achse und/oder eine Verschiebung entlang der Richtung (X) umfasst, wobei die y-Achse orthogonal auf die z-Achse orientiert ist und die y- und z-Achse jeweils orthogonal zur Richtung (X) orientiert sind. Die Richtung (X) kann in Lichtabstrahlrichtung und/oder in Fahrtrichtung eines Kraftfahrzeugs, welches die Beleuchtungsvorrichtung aufweist, orientiert sein. Die y- und z-Achsen liegen vorzugsweise innerhalb einer Symmetrieebene des optischen Elements, wobei die Symmetrieebene orthogonal zur Richtung (X) orientiert ist. Das optische Element kann beispielsweise eine Linse umfassen, wobei die Symmetrieebene die Symmetrieebene der Linse bildet.

Es kann vorgesehen sein, dass die Haltevorrichtung zumindest ein Eingriffselement aufweist, wobei das Eingriffselement zumindest zwei Rastausausnehmungen aufweist, welche in Richtung (X) beabstandet zueinander angeordnet sind, wobei das Ausgleichselement ein Rastelement aufweist, welches dazu eingerichtet ist, in eine der Rastausnehmungen des Eingriffselements einzugreifen, wobei der Eingriff des Rastelements in der ersten Rastausnehmung eine erste Position des optischen Elements relativ zu dem Leuchtmittel definiert und der Eingriff des Rastelements in der zweiten Rastausnehmung eine zweite Position des optischen Elements relativ zu dem Leuchtmittel definiert, wobei das optische Element in der ersten Position gegenüber der zweiten Position relativ zu dem Leuchtmittel verschwenkt und/oder verschoben ist. In der ersten Position kann das optische Element zu dem Leuchtmittel bzw. der Lichtbildebene einen ersten Abstand aufweisen und in der zweiten Position einen zweiten Abstand aufweisen. In der ersten Position kann das optische Element zu dem Leuchtmittel bzw. der Lichtbildebene einen ersten Winkel aufweisen und in der zweiten Position einen zweiten Winkel aufweisen. Bei einem Übergang, bei welchem das Rastelement von der ersten Rastausnehmung in die zweite Rastausnehmung übergeführt wird, kommt es vorzugsweise zu einem Verschieben des optischen Elements von dem ersten Abstand zu dem zweiten Abstand und/oder von dem ersten Winkel zu dem zweiten Winkel. Das Ausgleichselement und die Haltevorrichtung können insbesondere auch fest bzw. starr bzw. unlösbar miteinander verbunden sein, wobei die Verbindung zwischen dem Ausgleichselement und der Haltvorrichtung beispielsweise mittels einer Laserschweißverbindung herstellbar ist.

Es kann vorgesehen sein, dass das optische Element in der ersten Position gegenüber der zweiten Position relativ zu dem Leuchtmittel um eine y-Achse und/oder um eine z-Achse verschwenkt ist und/oder entlang der Richtung (X) verschoben ist, wobei die y-Achse orthogonal auf die z-Achse orientiert ist und die y- und z-Achse jeweils orthogonal zur Richtung (X) orientiert sind. Die y- und z-Achsen liegen vorzugsweise innerhalb einer Symmetrieebene des optischen Elements, wobei die Symmetrieebene orthogonal zur Richtung (X) orientiert ist.

Es kann vorgesehen sein, dass die Verschwenkung und/oder Verschiebung des optischen Elements von der ersten Position zur zweiten Position größer ist als die Verschwenkung und/oder Verschiebung des optischen Elements durch die temperaturabhängige Längsausdehnung des Ausgleichselements. Damit ergibt sich der Vorteil, dass mit der Verschwenkung und/oder Verschiebung des optischen Elements von der ersten Position zur zweiten Position eine grobe bzw. eine große Kompensation der Verlagerung des Brennpunkts auf Grund der Temperaturänderung des optischen Elements erfolgen kann und durch die temperaturabhängige Änderung der Längsausdehnung des Ausgleichselements eine feine bzw. kleine Kompensation der Verlagerung des Brennpunkts erfolgen kann.

Es kann vorgesehen sein, dass das optische Element einen ersten und einen zweiten Befestigungsbereich aufweist, wobei der erste Befestigungsbereich diametral zu dem zweiten Befestigungsbereich angeordnet ist, wobei an dem ersten Befestigungsbereich das Ausgleichselement und an dem zweiten Befestigungsbereich ein weiteres Ausgleichselement mit dem optischen Element verbunden ist, wobei das Ausgleichselement mit der Haltevorrichtung verbunden ist und an einem ersten Eingriffselement eingreift und das weitere Ausgleichselement mit der Haltevorrichtung verbunden ist und an einem zweiten Eingriffselement eingreift. Damit ergibt sich der Vorteil, dass mit dem Ausgleichselement beispielsweise eine Verschwenkung des optischen Elements um die y-Achse und mit dem weiteren Ausgleichselement eine Verschwenkung des optischen Elements um die z-Achse erfolgen kann.

Es kann vorgesehen sein, dass das Rastelement als Rastnase ausgebildet ist, welche sich von einer Oberfläche des Ausgleichselements weg im Wesentlichen entlang der y- oder z-Achse erstreckt.

Es kann vorgesehen sein, dass das Ausgleichselement stabförmig ausgebildet ist. Insbesondere ist das Ausgleichselement länglich ausgebildet. Das Ausgleichselement weist vorzugsweise eine Länge auf, welche mind. 5 mal, bevorzugt 10 mal, besonders bevorzugt mehr als 15 mal, größer ist als die Breite und Höhe des Ausgleichselements.

Es kann vorgesehen sein, dass die Haltevorrichtung als Hohlkörper ausgebildet ist, welcher einen Lichtleitkanal und einen den Lichtleitkanal umschließenden Mantel umfasst, wobei der Mantel einen ersten Endabschnitt und einen dem ersten Endabschnitt gegenüberliegenden zweiten Endabschnitt aufweist, wobei zumindest ein Endabschnitt das zumindest eine Eingriffselement aufweist, wobei vorzugsweise an dem ersten Endabschnitt das Leuchtmittel und an dem zweiten Endabschnitt das optische Element angeordnet ist. Die Haltevorrichtung kann als hohle Lichtleitröhre ausgebildet sein, wobei an einem ersten Ende der Lichtleitröhre das Leuchtmittel und an einem zweiten Ende der Lichtleitröhre das optische Element angeordnet ist.

Es kann vorgesehen sein, dass das Licht des Leuchtmittels von dem Leuchtmittel durch den Lichtleitkanal hindurch auf das optische Element abgestrahlt wird, wobei vorzugsweise der Mantel lichtundurchlässig ausgebildet ist.

Es kann vorgesehen sein, dass das Eingriffselement drei oder mehr Rastausnehmungen aufweist. Damit kann die grobe Kompensation der temperaturbedingten Brennpunktsverschiebung in drei oder mehr Stufen erfolgen. Die zwei, drei oder mehr Rausausnehmungen sind insbesondere in gleichmäßigen Abständen zueinander angeordnet. Es kann vorgesehen sein, dass das optische Element als Linse ausgebildet ist. Die Linse kann beispielsweise ein sphärische, asphärische, konvexe, bi-konvexe, konkave, bi-konkave Linse oder eine Freiformlinse sein.

Es kann vorgesehen sein, dass zwischen dem Leuchtmittel und dem optischen Element eine Blende angeordnet ist, wobei vorzugsweise die Blende in der Lichtbildebene liegt.

Es kann vorgesehen sein, dass das Ausgleichselement einen ersten Wärmeausdehnungskoeffizienten, das optische Element einen zweiten Wärmeausdehnungskoeffizienten und die Haltevorrichtung einen dritten Wärmeausdehnungskoeffizienten aufweist, wobei der erste Wärmeausdehnungskoeffizient unterschiedlich zu dem zweiten und dritten Wärmeausdehnungskoeffizient ist. Der zweite und der dritte Wärmeausdehnungskoeffizient können jeweils gleich oder unterschiedlich sein. Der erste Wärmeausdehnungskoeffizient kann zwischen 0,03 K⁻¹ und 0,25 K⁻¹, bevorzugt zwischen 0,06 K⁻¹ und 0,2 K⁻¹, liegen.

Erfindungsgemäß ist ein Kraftfahrzeugscheinwerfer, umfassend eine Beleuchtungsvorrichtung, vorgesehen.

Im Rahmen dieser Beschreibung sind die Begriffe "oben", "unten", "horizontal", "vertikal" als Angaben der Ausrichtung zu verstehen, wenn die Beleuchtungsvorrichtung in normaler Benutzungsstellung angeordnet ist, nachdem sie beispielsweise in einem Kraftfahrzeug eingebaut wurde.

Die Erfindung wird nachstehend anhand eines bevorzugten Ausführungsbeispiels, auf das sie jedoch nicht beschränkt sein soll, noch weiter erläutert. In den Zeichnungen zeigt:
Fig. 1 eine Detailansicht einer erfindungsgemäßen Beleuchtungsvorrichtung;
Fig. 2 eine weitere Detailansicht der Beleuchtungsvorrichtung;
Fig. 3 eine Detailansicht des Ausgleichselements;
Fig. 4a-4c horizontale Schnittansichten von drei Zuständen der Beleuchtungsvorrichtung; und
Fig. 5a-5c vertikale Schnittansichten von drei Zuständen der Beleuchtungsvorrichtung.

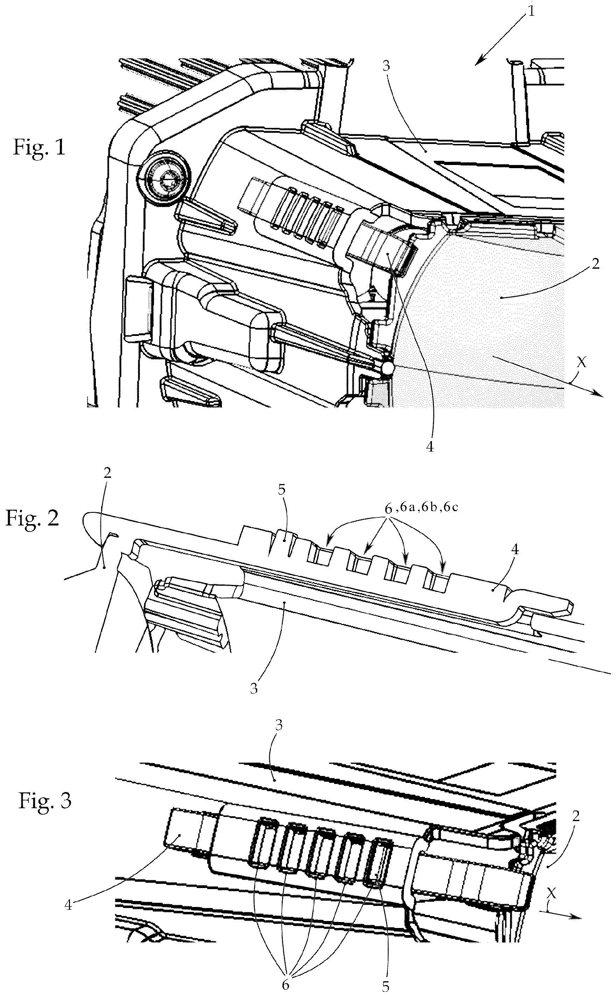

Fig. 1 zeigt eine Detailansicht einer Beleuchtungsvorrichtung 1 für einen Kraftfahrzeugscheinwerfer. Um die Darstellung zu vereinfachen, sind nicht wesentliche Elemente nicht gezeigt. Die Beleuchtungsvorrichtung 1 umfasst ein (nicht gezeigtes) Leuchtmittel zur Erzeugung und Abstrahlung von Licht. Das Leuchtmittel ist dazu eingerichtet, ein in einer Lichtbildebene liegendes Lichtbild zu erzeugen. Ferner umfasst die Beleuchtungsvorrichtung 1 ein optisches Element 2 zur Bildung einer Lichtverteilung aus dem mit dem Leuchtmittel erzeugten Lichtbild. Das optische Element 2 ist in Lichtausbreitungsrichtung nach der Lichtbildebene angeordnet ist und hat einen Brennpunkt und eine optische Achse 2a. In dem gezeigten Ausführungsbeispiels ist das optische Element 2 als Linse ausgebildet. Der Brennpunkt des optischen Elements 2 liegt zwischen dem optischen Element 2 und dem Leuchtmittel und die optische Achse 2a verläuft zwischen dem optischen Element 2 und dem Leuchtmittel. Das optische Element 2 ist dazu eingerichtet, das Lichtbild in Form einer Lichtverteilung in einen Verkehrsraum, beispielsweise in Form eines Abblendlichts oder eines Fernlichts, abzubilden.

Die Beleuchtungsvorrichtung 1 umfasst eine Haltevorrichtung 3, die insbesondere dazu eingerichtet ist, die Position des optischen Elements 2 in Relation zu dem Leuchtmittel dergestalt zu halten, dass, in einem ausgeschalteten Zustand des Leuchtmittels, der Brennpunkt des optischen Elements 2 außerhalb der Lichtbildebene liegt. In einer alternativen Ausführungsform, kann die Haltevorrichtung 3 dazu eingerichtet sein, die Position des optischen Elements 2 in Relation zu dem Leuchtmittel dergestalt zu halten, dass, in einem ausgeschalteten Zustand des Leuchtmittels, der Brennpunkt des optischen Elements 2 innerhalb der Lichtbildebene liegt, was aber nicht gemäß der Erfindung ist.

Die Haltevorrichtung 3 weist zumindest ein Ausgleichselement 4 auf, welches das optische Element 2 mit der Haltevorrichtung 3 verbindet. Das Ausgleichselement 4 weist einen ersten Endabschnitt 4a und einen zweiten Endabschnitt 4b auf, wobei der erste Endabschnitt 4a mit dem optischen Element 2 und der zweite Endabschnitt 4b mit der Haltevorrichtung 3 verbunden ist. Das Ausgleichselement ist insbesondere stabförmig ausgebildet.

Das Ausgleichselement 4 ist aus einem Material gebildet, welches dergestalt ausgebildet ist, dass das Ausgleichselement 4 eine temperaturabhängige Längsausdehnung in einer Richtung X aufweist, wobei die Richtung X parallel zur optischen Achse 2a des optischen Elements 2 verläuft. Das Ausgleichselement 4 ist mit dem optischen Element 2 dergestalt verbunden und dazu eingerichtet, das optische Element 2 in Abhängigkeit einer Temperatur relativ zu der Lichtbildebene derart zu verschwenken und/oder zu verschieben, sodass der Brennpunkt des optischen Elements 2, vorzugsweise stets, innerhalb der Lichtbildebene liegt.

Die Verschwenkung und/oder Verschiebung des optischen Elements 2 durch die temperaturabhängige Änderung der Längsausdehnung des Ausgleichselement 4 kann eine Verschwenkung des optischen Elements 2 um eine y-Achse und/oder um eine z-Achse und/oder eine Verschiebung entlang der Richtung X umfassen. Die y-Achse kann orthogonal auf die z-Achse orientiert sein und die y- und z-Achse können jeweils orthogonal zur Richtung X orientiert sein.

Wie in den Fig. 2 und 3 im Detail ersichtlich weist die Haltevorrichtung 3 zumindest ein Eingriffselement 6 auf, wobei das Eingriffselement 6 zumindest zwei Rastausausnehmungen 6a, 6b aufweist, welche in Richtung X beabstandet zueinander angeordnet sind. Das Ausgleichselement 4 weist ein Rastelement 5 auf, welches dazu eingerichtet ist, in eine der Rastausnehmungen 6a, 6b des Eingriffselements 6 einzugreifen. Das Rastelement 5 kann als Rastnase ausgebildet sein, welche sich im Wesentlichen orthogonal von einer Oberfläche des Ausgleichselements 4 weg erstreckt. Das Eingriffselement 6 kann drei oder mehr Rastausnehmungen 6a, 6b, 6c aufweisen, in dem gezeigt Ausführungsbeispiel weist das Eingriffselement 6 fünf Rastausnehmungen auf.

Der Eingriff des Rastelements 5 in der ersten Rastausnehmung 6a definiert eine erste Position des optischen Elements 2 relativ zu dem Leuchtmittel und der Eingriff des Rastelements 5 in der zweiten Rastausnehmung 6b definiert eine zweite Position des optischen Elements 2 relativ zu dem Leuchtmittel. Das optische Element 2 kann in der ersten Position gegenüber der zweiten Position relativ zu dem Leuchtmittel verschwenkt und/oder verschoben sein. Das optische Element 2 kann in der ersten Position gegenüber der zweiten Position relativ zu dem Leuchtmittel um eine y-Achse und/oder um eine z-Achse verschwenkt sein und/oder entlang der Richtung X verschoben sein, wobei die y-Achse orthogonal auf die z-Achse orientiert ist und die y- und z-Achse jeweils orthogonal zur Richtung X orientiert sind.

Die Verschwenkung und/oder Verschiebung des optischen Elements 2 von der ersten Position zur zweiten Position ist größer als die Verschwenkung und/oder Verschiebung des optischen Elements 2 durch die temperaturabhängige Längsausdehnung des Ausgleichselements 4.

Das optische Element 2 einen ersten und einen zweiten Befestigungsbereich aufweisen, wobei der erste Befestigungsbereich diametral zu dem zweiten Befestigungsbereich angeordnet ist. An dem ersten Befestigungsbereich kann das Ausgleichselement 4 und an dem zweiten Befestigungsbereich kann ein weiteres Ausgleichselement 4 mit dem optischen Element 2 verbunden sein, wobei das Ausgleichselement 4 mit der Haltevorrichtung 3 verbunden ist und an einem ersten Eingriffselement 6 eingreift und das weitere Ausgleichselement 4 mit der Haltevorrichtung verbunden ist und an einem zweiten Eingriffselement 6 eingreift.

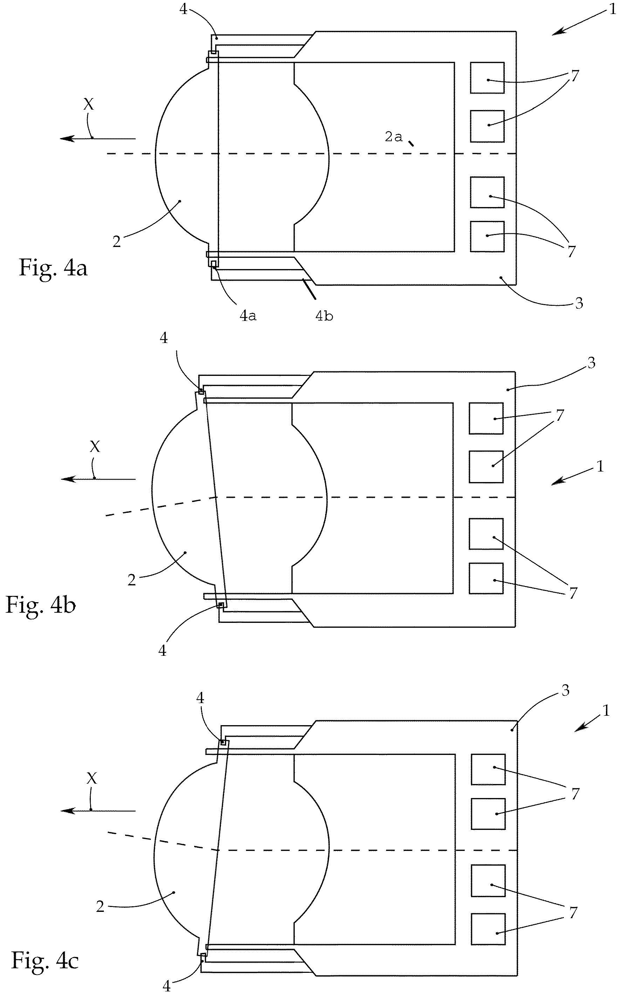

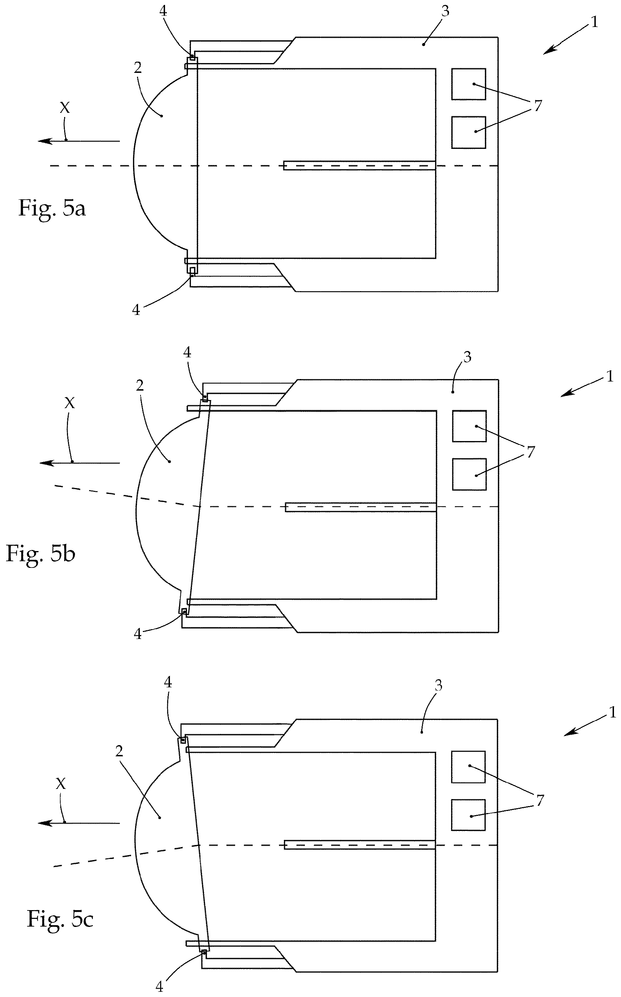

Wie in den Fig. 4a-4c und 5a-5c ersichtlich, ist die Haltevorrichtung 3 bevorzugt als Hohlkörper ausgebildet, welcher einen Lichtleitkanal und einen den Lichtleitkanal umschließenden Mantel umfasst, wobei der Mantel einen ersten Endabschnitt und einen dem ersten Endabschnitt gegenüberliegenden zweiten Endabschnitt aufweist. Zumindest ein Endabschnitt weist das zumindest eine Eingriffselement 6 auf, wobei vorzugsweise an dem ersten Endabschnitt das Leuchtmittel und an dem zweiten Endabschnitt das optische Element angeordnet ist.

Das Licht des Leuchtmittels wird von dem Leuchtmittel durch den Lichtleitkanal hindurch auf das optische Element 2 abgestrahlt, wobei vorzugsweise der Mantel lichtundurchlässig ausgebildet ist.

Zwischen dem Leuchtmittel und dem optischen Element 2 kann eine Blende angeordnet sein, wobei die Blende vorzugsweise in der Lichtbildebene liegt.

Das in den Fig. 4a-4c und 5a-5c gezeigte Ausführungsbeispiel der Beleuchtungsvorrichtung 1 weist vier Ausgleichselemente 4 auf, wobei das optische Element 2 vier Ecken aufweist und an jeder Ecke bzw. an jedem Eckbereiche des optischen Elements 2 ein Ausgleichselement 4 mit dem optischen Element 2 verbunden ist. Die Darstellungen in den Fig. 4a-4c und Fig. 5a-5c sind stark vereinfacht und rein schematisch. Die Haltevorrichtung 3 weist vier mit den Ausgleichselementen 4 zusammenwirkende bzw. zu den Ausgleichselementen 4 korrespondierende Eingriffselemente 6 auf, wobei jeweils ein Eingriffselement 6 mit einem Ausgleichselement 4 zusammenwirkt.

Die Fig. 4a-4c zeigen Draufsichten auf horizontale Schnitte von drei Zuständen der Beleuchtungsvorrichtung 1.

Fig. 4a zeigt einen ersten Zustand, in welchem das optische Element 2 relativ zu der Lichtbildebene bzw. zu Lichtquellen 7 unverschwenkt ist. In diesem Zustand sind die Lichtquellen 7 vorzugsweise ausgeschaltet und emittieren kein Licht. Die Ausgleichselemente 4, welche das optische Element 2 mit der Haltevorrichtung 3 verbinden, weisen im ersten Zustand eine erste Länge auf.

Fig. 4b zeigt einen zweiten Zustand, in welchem das optische Element 2 relativ zu der Lichtbildebene bzw. zu den Lichtquellen 7 verschwenkt ist. In diesem Zustand sind die Lichtquellen 7 vorzugsweise eingeschaltet und emittieren Licht. Durch die von den Lichtquellen 7 abgegebene Wärme kommt es zu einer Längenänderung der Ausgleichselemente 4, insbesondere zu einer Längsausdehnung der Ausgleichselemente 4. Die Ausgleichselemente 4 weisen im zweiten Zustand eine zweite Länge auf.

Das Material der vier Ausgleichselemente 4 ist derart gewählt, dass die wärmebedingte Längsausdehnung der einzelnen Ausgleichselemente 4 dergestalt ist, dass es zu einer Verschwenkung des optischen Elements 2 (in Lichtausbreitungsrichtung) nach links kommt. Demnach weisen die an der in Lichtausbreitungsrichtung rechten Seite des optischen Elements 2 (in Fig. 4b links oben) angeordneten Ausgleichselemente 4 eine größere wärmebedingte Längenänderung auf als die an der in Lichtausbreitungsrichtung linken Seite des optischen Elements (in Fig. 4b links unten) angeordneten Ausgleichselemente 4.

In Fig. 4c weisen die an der in Lichtausbreitungsrichtung rechten Seite des optischen Elements 2 (in Fig. 4c links oben) angeordneten Ausgleichselemente 4 eine kleinere wärmebedingte Längenänderung auf als die an der in Lichtausbreitungsrichtung linken Seite des optischen Elements (in Fig. 4c links unten) angeordneten Ausgleichselemente 4. Dadurch kommt es zu einer Verschwenkung des optischen Elements nach rechts.

Die in den Fig. 4a-4c gezeigte strichlierte Linie deutet die Lichtausbreitungsrichtung des mit der Beleuchtungsvorrichtung 1 abgestrahlten Lichts an.

Mit der in den Fig. 4b und 4c gezeigten Verschwenkungen des optischen Elements 2 kann insbesondere Licht, welches von der Beleuchtungsvorrichtung 1 in einen Verkehrsraum abgestrahlt wird, in einer horizontalen Ebene verschwenkt werden, wodurch ein beispielsweise Kurvenlicht realisiert werden kann.

Die Fig. 5a-5c zeigen Seitansichten auf vertikale Schnitte von drei Zuständen der Beleuchtungsvorrichtung 1.

Fig. 5a zeigt einen Zustand, in welchem das optische Element 2 relativ zu der Lichtbildebene bzw. zu Lichtquellen 7 unverschwenkt ist. Analog zu der Fig. 4a sind in diesem Zustand die Lichtquellen 7 ausgeschaltet und emittiert kein Licht. In diesem Ausführungsbeispiel sind 2 Lichtquellen 7 vorgesehen. Es kann auch eine beliebige Anzahl an Lichtquellen 7 vorgesehen sein. Die Ausgleichselemente 4, welche das optische Element 2 mit der Haltevorrichtung 3 verbinden, weisen in diesem Zustand eine erste Länge auf.

In den Fig. 5b und 5c sind jeweils verschwenkte Zustände abgebildet. In Fig. 5b führt die wärmebedingte Längenänderung der Ausgleichselemente 4 zu einer Verschwenkung des optischen Elements 2 nach oben (in Lichtausbreitungsrichtung gesehen). In Fig. 5c führt die wärmebedingte Längenänderung der Ausgleichselemente 4 zu einer Verschwenkung des optischen Elements 2 nach unten. Die in den Fig. 5b und 5c gezeigte Verschwenkung des optischen Elements 2 kann die vertikale Höhe des von der Beleuchtungsvorrichtung in einen Verkehrsraum abgestrahlten Lichts variieren bzw. einstellen.

Die in den Fig. 5a-5c gezeigte strichlierte Linie deutet die Lichtausbreitungsrichtung des mit der Beleuchtungsvorrichtung 1 abgestrahlten Lichts an.

## Patentansprüche

1. Beleuchtungsvorrichtung (1) für einen Kraftfahrzeugscheinwerfer, umfassend:
- ein Leuchtmittel zur Erzeugung und Abstrahlung von Licht, wobei das Leuchtmittel dazu eingerichtet ist, ein in einer Lichtbildebene liegendes Lichtbild zu erzeugen,
- ein optisches Element (2) zur Bildung einer Lichtverteilung aus dem mit dem Leuchtmittel erzeugten Lichtbild, wobei das optische Element (2) in Lichtausbreitungsrichtung nach der Lichtbildebene angeordnet ist und einen Brennpunkt und eine optische Achse (2a) aufweist, wobei der Brennpunkt zwischen dem optischen Element (2) und dem Leuchtmittel liegt und die optische Achse (2a) zwischen dem optischen Element (2) und dem Leuchtmittel verläuft, wobei das optische Element (2) dazu eingerichtet ist, das Lichtbild in Form einer Lichtverteilung in einen Verkehrsraum abzubilden,
- eine Haltevorrichtung (3), welche dazu eingerichtet ist, die Position des optischen Elements (2) in Relation zu dem Leuchtmittel dergestalt zu halten, dass, in einem ausgeschalteten Zustand des Leuchtmittels, der Brennpunkt des optischen Elements (2) außerhalb der Lichtbildebene liegt,
wobei die Haltevorrichtung (3) zumindest ein Ausgleichselement (4) aufweist, welches das optische Element (2) mit der Haltevorrichtung (3) verbindet, wobei das Ausgleichselement (4) einen ersten Endabschnitt (4a) und einen zweiten Endabschnitt (4b) aufweist, wobei der erste Endabschnitt (4a) mit dem optischen Element (2) und der zweite Endabschnitt (4b) mit der Haltevorrichtung (3) verbunden ist, wobei das Ausgleichselement (4) aus einem Material gebildet ist, welches dergestalt ausgebildet ist, dass das Ausgleichselement (4) eine temperaturabhängige Längsausdehnung in einer Richtung (X) aufweist, wobei die Richtung (X) parallel zur optischen Achse (2a) des optischen Elements (2) verläuft, wobei das Ausgleichselement (4) mit dem optischen Element (2) dergestalt verbunden und dazu eingerichtet ist, das optische Element (2) in Abhängigkeit einer Temperatur relativ zu der Lichtbildebene derart zu verschwenken und/oder zu verschieben, dass, in einem eingeschalteten Zustand des Leuchtmittels, in welchem eine höhere Temperatur im Vergleich zum ausgeschalteten Zustand vorliegt, der Brennpunkt des optischen Elements (2) innerhalb der Lichtbildebene liegt.

2. Beleuchtungsvorrichtung (1) nach Anspruch 1, wobei die Verschwenkung und/oder Verschiebung des optischen Elements (2) durch die temperaturabhängige Änderung der Längsausdehnung des Ausgleichselements (4) eine Verschwenkung des optischen Elements (2) um eine y-Achse und/oder um eine z-Achse und/oder eine Verschiebung entlang der Richtung (X) umfasst, wobei die y-Achse orthogonal auf die z-Achse orientiert ist und die y- und z-Achse jeweils orthogonal zur Richtung (X) orientiert sind.

3. Beleuchtungsvorrichtung (1) nach einem der vorhergehenden Ansprüche, wobei die Haltevorrichtung (3) zumindest ein Eingriffselement (6) aufweist, wobei das Eingriffselement (6) zumindest zwei Rastausausnehmungen (6a, 6b) aufweist, welche in Richtung (X) beabstandet zueinander angeordnet sind, wobei das Ausgleichselement (4) ein Rastelement (5) aufweist, welches dazu eingerichtet ist, in eine der Rastausnehmungen (6a, 6b) des Eingriffselements (6) einzugreifen, wobei der Eingriff des Rastelements (5) in der ersten Rastausnehmung (6a) eine erste Position des optischen Elements (2) relativ zu dem Leuchtmittel definiert und der Eingriff des Rastelements (5) in der zweiten Rastausnehmung (6b) eine zweite Position des optischen Elements (2) relativ zu dem Leuchtmittel definiert, wobei das optische Element (2) in der ersten Position gegenüber der zweiten Position relativ zu dem Leuchtmittel verschwenkt und/oder verschoben ist.

4. Beleuchtungsvorrichtung (1) nach Anspruch 3, wobei das optische Element (2) in der ersten Position gegenüber der zweiten Position relativ zu dem Leuchtmittel um eine y-Achse und/oder um eine z-Achse verschwenkt ist und/oder entlang der Richtung (X) verschoben ist, wobei die y-Achse orthogonal auf die z-Achse orientiert ist und die y- und z-Achse jeweils orthogonal zur Richtung (X) orientiert sind.

5. Beleuchtungsvorrichtung (1) nach Anspruch 4, wobei die Verschwenkung und/oder Verschiebung des optischen Elements (2) von der ersten Position zur zweiten Position größer ist als die Verschwenkung und/oder Verschiebung des optischen Elements (2) durch die temperaturabhängige Längsausdehnung des Ausgleichselements (4).

6. Beleuchtungsvorrichtung (1) nach einem der Ansprüche 3 bis 5, wobei das optische Element (2) einen ersten und einen zweiten Befestigungsbereich aufweist, wobei der erste Befestigungsbereich diametral zu dem zweiten Befestigungsbereich angeordnet ist, wobei an dem ersten Befestigungsbereich das Ausgleichselement (4) und an dem zweiten Befestigungsbereich ein weiteres Ausgleichselement (4) mit dem optischen Element (2) verbunden ist, wobei das Ausgleichselement (4) mit der Haltevorrichtung (3) verbunden ist und an einem ersten Eingriffselement (6) eingreift und das weitere Ausgleichselement (4) mit der Haltevorrichtung verbunden ist und an einem zweiten Eingriffselement (6) eingreift.

7. Beleuchtungsvorrichtung (1) nach einem der Ansprüche 3 bis 6, wobei das Rastelement (5) als Rastnase ausgebildet ist, welche sich von einer Oberfläche des Ausgleichselements (4) weg im Wesentlichen entlang der y- oder z-Achse erstreckt.

8. Beleuchtungsvorrichtung (1) nach einem der vorhergehenden Ansprüche, wobei das Ausgleichselement stabförmig ausgebildet ist.

9. Beleuchtungsvorrichtung (1) nach einem der vorhergehenden Ansprüche, wobei die Haltevorrichtung (3) als Hohlkörper ausgebildet ist, welcher einen Lichtleitkanal und einen den Lichtleitkanal umschließenden Mantel umfasst, wobei der Mantel einen ersten Endabschnitt und einen dem ersten Endabschnitt gegenüberliegenden zweiten Endabschnitt aufweist, wobei zumindest ein Endabschnitt das zumindest eine Eingriffselement (6) aufweist, wobei vorzugsweise an dem ersten Endabschnitt das Leuchtmittel und an dem zweiten Endabschnitt das optische Element angeordnet ist.

10. Beleuchtungsvorrichtung (1) nach Anspruch 9, wobei das Licht des Leuchtmittels von dem Leuchtmittel durch den Lichtleitkanal hindurch auf das optische Element abgestrahlt wird, wobei vorzugsweise der Mantel lichtundurchlässig ausgebildet ist.

11. Beleuchtungsvorrichtung (1) nach einem der vorhergehenden Ansprüche, wobei das Eingriffselement (6) drei oder mehr Rastausnehmungen (6a, 6b, 6c) aufweist.

12. Beleuchtungsvorrichtung (1) nach einem der vorhergehenden Ansprüche, wobei das optische Element (2) als Linse ausgebildet ist.

13. Beleuchtungsvorrichtung (1) nach einem der vorhergehenden Ansprüche, wobei zwischen dem Leuchtmittel und dem optischen Element (2) eine Blende angeordnet ist, wobei vorzugsweise die Blende in der Lichtbildebene liegt.

14. Beleuchtungsvorrichtung (1) nach einem der vorhergehenden Ansprüche, wobei das Ausgleichselement (4) einen ersten Wärmeausdehnungskoeffizienten, das optische Element (2) einen zweiten Wärmeausdehnungskoeffizienten und die Haltevorrichtung (3) einen dritten Wärmeausdehnungskoeffizienten aufweist, wobei der erste Wärmeausdehnungskoeffizient unterschiedlich zu dem zweiten und dritten Wärmeausdehnungskoeffizient ist.

15. Kraftfahrzeugscheinwerfer, umfassend eine Beleuchtungsvorrichtung (1) nach einem der vorhergehenden Ansprüche.

## Claims

1. Lighting device (1) for a motor vehicle headlamp, comprising:
- an illuminant for generating and emitting light, the illuminant being set up to generate a light image lying in a light image plane,
- an optical element (2) for forming a light distribution from the light image generated by the illuminant, wherein the optical element (2) is arranged in the direction of light propagation according to the light image plane and has a focal point and an optical axis (2a), wherein the focal point lies between the optical element (2) and the illuminant and the optical axis (2a) extends between the optical element (2) and the illuminant, wherein the optical element (2) is arranged to image the light image in the form of a light distribution in a traffic area,
- a holding device (3) which is set up to hold the position of the optical element (2) in relation to the illuminant in such a way that, in a switched-off state of the illuminant, the focal point of the optical element (2) lies outside the light image plane,
**wherein**
the holding device (3) has at least one compensating element (4) which connects the optical element (2) to the holding device (3), the compensating element (4) having a first end section (4a) and a second end section (4b), the first end section (4a) being connected to the optical element (2) and the second end section (4b) being connected to the holding device (3), the compensating element (4) being formed from a material which is designed in such a way that the compensating element (4) has a temperature-dependent longitudinal expansion in a direction (X), wherein the direction (X) runs parallel to the optical axis (2a) of the optical element (2), wherein the compensating element (4) is connected to the optical element (2) in such a way and is set up to pivot and/or displace the optical element (2) relative to the light-forming plane as a function of a temperature in such a way that, in a switched-on state of the illuminant, in which a higher temperature is present compared to the switched-off state, the focal point of the optical element (2) lies within the light-forming plane.

2. Lighting device (1) according to claim 1, wherein the pivoting and/or displacement of the optical element (2) by the temperature-dependent change in the longitudinal expansion of the compensating element (4) comprises a pivoting of the optical element (2) about a y-axis and/or about a z-axis and/or a displacement along the direction (X), wherein the y-axis is oriented orthogonally to the z-axis and the y- and z-axes are each oriented orthogonally to the direction (X).

3. Lighting device (1) according to one of the preceding claims, wherein the holding device (3) has at least one engagement element (6), wherein the engagement element (6) has at least two latching recesses (6a, 6b) which are arranged at a distance from one another in the direction (X), wherein the compensating element (4) has a latching element (5) which is set up to engage in one of the latching recesses (6a, 6b) of the engagement element (6), wherein the engagement of the latching element (5) in the first latching recess (6a) defines a first position of the optical element (2) relative to the illuminant and the engagement of the latching element (5) in the second latching recess (6b) defines a second position of the optical element (2) relative to the illuminant, wherein the optical element (2) is pivoted and/or displaced relative to the illuminant in the first position with respect to the second position.

4. Lighting device (1) according to claim 3, wherein the optical element (2) in the first position is pivoted relative to the second position relative to the illuminant about a y-axis and/or about a z-axis and/or is displaced along the direction (X), wherein the y-axis is oriented orthogonally to the z-axis and the y- and z-axes are each oriented orthogonally to the direction (X).

5. Lighting device (1) according to claim 4, wherein the pivoting and/or displacement of the optical element (2) from the first position to the second position is greater than the pivoting and/or displacement of the optical element (2) due to the temperature-dependent longitudinal expansion of the compensating element (4).

6. Lighting device (1) according to one of claims 3 to 5, wherein the optical element (2) has a first and a second fastening region, wherein the first fastening region is arranged diametrically to the second fastening region, wherein the compensating element (4) is connected to the optical element (2) at the first fastening region and a further compensating element (4) is connected to the optical element (2) at the second fastening region, wherein the compensating element (4) is connected to the holding device (3) and engages on a first engagement element (6) and the further compensating element (4) is connected to the holding device and engages on a second engagement element (6).

7. Lighting device (1) according to one of claims 3 to 6, wherein the latching element (5) is designed as a latching nose which extends away from a surface of the compensating element (4) substantially along the y- or z-axis.

8. Lighting device (1) according to one of the preceding claims, wherein the compensating element is rod-shaped.

9. Lighting device (1) according to one of the preceding claims, wherein the holding device (3) is designed as a hollow body which comprises a light guide channel and a sheath enclosing the light guide channel, wherein the sheath has a first end section and a second end section opposite the first end section, wherein at least one end section has the at least one engagement element (6), wherein the illuminant is preferably arranged at the first end section and the optical element is preferably arranged at the second end section.

10. Lighting device (1) according to claim 9, wherein the light of the illuminant is emitted from the illuminant through the light guide channel onto the optical element, wherein preferably the casing is designed to be opaque.

11. Lighting device (1) according to one of the preceding claims, wherein the engagement element (6) has three or more latching recesses (6a, 6b, 6c).

12. Lighting device (1) according to one of the preceding claims, wherein the optical element (2) is designed as a lens.

13. Lighting device (1) according to one of the preceding claims, wherein a diaphragm is arranged between the illuminant and the optical element (2), wherein preferably the diaphragm lies in the light image plane.

14. Lighting device (1) according to any one of the preceding claims, wherein the equalizing element (4) has a first coefficient of thermal expansion, the optical element (2) has a second coefficient of thermal expansion and the holding device (3) has a third coefficient of thermal expansion, wherein the first coefficient of thermal expansion is different from the second and third coefficients of thermal expansion.

15. Motor vehicle headlamp, comprising a lighting device (1) according to any of the preceding claims.

## Revendications

1. Dispositif d'éclairage (1) pour un projecteur de véhicule automobile, comprenant :
- un moyen d'éclairage pour produire et émettre de la lumière, le moyen d'éclairage étant conçu pour produire une image lumineuse située dans un plan d'image lumineuse,
- un élément optique (2) pour former une distribution de lumière à partir de l'image lumineuse générée par le moyen d'éclairage, l'élément optique (2) étant disposé dans la direction de propagation de la lumière après le plan d'image lumineuse et présentant un foyer et un axe optique (2a), le foyer étant situé entre l'élément optique (2) et le moyen d'éclairage et l'axe optique (2a) s'étendant entre l'élément optique (2) et le moyen d'éclairage, l'élément optique (2) étant conçu pour représenter l'image lumineuse sous la forme d'une distribution de lumière dans un espace de circulation,
- un dispositif de maintien (3) qui est conçu pour maintenir la position de l'élément optique (2) par rapport au moyen d'éclairage de telle sorte que, dans un état éteint du moyen d'éclairage, le point focal de l'élément optique (2) se trouve en dehors du plan d'image lumineux,
**dans lequel**
le dispositif de maintien (3) comprend au moins un élément de compensation (4) qui relie l'élément optique (2) au dispositif de maintien (3), l'élément de compensation (4) comprenant une première partie d'extrémité (4a) et une deuxième partie d'extrémité (4b), la première partie d'extrémité (4a) étant reliée à l'élément optique (2) et la deuxième partie d'extrémité (4b) étant reliée au dispositif de maintien (3), l'élément de compensation (4) étant formé d'un matériau qui est conçu de telle sorte que l'élément de compensation (4) présente une dilatation longitudinale dépendant de la température dans une direction (X), la direction (X) s'étendant parallèlement à l'axe optique (2a) de l'élément optique (2), l'élément de compensation (4) étant relié à l'élément optique (2) de telle sorte et étant conçu pour faire pivoter et/ou déplacer l'élément optique (2) en fonction d'une température par rapport au plan d'image de la lumière de telle sorte que, dans un état allumé du moyen d'éclairage, dans lequel une température plus élevée est présente par rapport à l'état éteint, le point focal de l'élément optique (2) se trouve à l'intérieur du plan d'image de la lumière.

2. Dispositif d'éclairage (1) selon la revendication 1, dans lequel le pivotement et/ou le déplacement de l'élément optique (2) par la variation de la dilatation longitudinale de l'élément de compensation (4) en fonction de la température comprend un pivotement de l'élément optique (2) autour d'un axe y et/ou autour d'un axe z et/ou un déplacement le long de la direction (X), l'axe y étant orienté orthogonalement à l'axe z et les axes y et z étant chacun orientés orthogonalement à la direction (X).

3. Dispositif d'éclairage (1) selon l'une quelconque des revendications précédentes, dans lequel le dispositif de maintien (3) comprend au moins un élément d'engagement (6), l'élément d'engagement (6) comprenant au moins deux évidements d'encliquetage (6a, 6b) espacés l'un de l'autre dans la direction (X), l'élément de compensation (4) comprenant un élément d'encliquetage (5) adapté pour s'engager dans l'un des évidements d'encliquetage (6a, 6b) de l'élément d'engagement (6), l'engagement de l'élément d'encliquetage (5) dans le premier évidement d'encliquetage (6a) définissant une première position de l'élément optique (2) par rapport au moyen d'éclairage et l'engagement de l'élément d'encliquetage (5) dans le deuxième évidement d'encliquetage (6b) définissant une deuxième position de l'élément optique (2) par rapport au moyen d'éclairage, l'élément optique (2) étant pivoté et/ou déplacé dans la première position par rapport à la deuxième position par rapport au moyen d'éclairage.

4. Dispositif d'éclairage (1) selon la revendication 3, dans lequel l'élément optique (2) dans la première position est pivoté par rapport à la deuxième position par rapport au moyen d'éclairage autour d'un axe y et/ou autour d'un axe z et/ou est déplacé le long de la direction (X), l'axe y étant orienté orthogonalement à l'axe z et les axes y et z étant orientés respectivement orthogonalement à la direction (X).

5. Dispositif d'éclairage (1) selon la revendication 4, dans lequel le pivotement et/ou le déplacement de l'élément optique (2) de la première position à la deuxième position est supérieur au pivotement et/ou au déplacement de l'élément optique (2) par la dilatation longitudinale de l'élément de compensation (4) en fonction de la température.

6. Dispositif d'éclairage (1) selon l'une des revendications 3 à 5, dans lequel l'élément optique (2) comporte une première et une deuxième zone de fixation, la première zone de fixation étant diamétralement opposée à la deuxième zone de fixation, l'élément de compensation (4) étant relié à l'élément optique (2) au niveau de la première zone de fixation et un autre élément de compensation (4) étant relié à la deuxième zone de fixation, l'élément de compensation (4) étant relié au dispositif de fixation (3) et s'engageant sur un premier élément d'engagement (6) et l'autre élément de compensation (4) étant relié au dispositif de fixation et s'engageant sur un deuxième élément d'engagement (6).

7. Dispositif d'éclairage (1) selon l'une des revendications 3 à 6, dans lequel l'élément d'encliquetage (5) est réalisé sous la forme d'un ergot d'encliquetage qui s'étend à partir d'une surface de l'élément de compensation (4) sensiblement le long de l'axe y ou z.

8. Dispositif d'éclairage (1) selon l'une des revendications précédentes, dans lequel l'élément de compensation est en forme de tige.

9. Dispositif d'éclairage (1) selon l'une des revendications précédentes, dans lequel le dispositif de maintien (3) est réalisé sous la forme d'un corps creux qui comprend un canal de guidage de lumière et une enveloppe entourant le canal de guidage de lumière, l'enveloppe présentant une première section d'extrémité et une deuxième section d'extrémité opposée à la première section d'extrémité, au moins une section d'extrémité présentant le au moins un élément d'engagement (6), le moyen d'éclairage étant de préférence disposé sur la première section d'extrémité et l'élément optique sur la deuxième section d'extrémité.

10. Dispositif d'éclairage (1) selon la revendication 9, dans lequel la lumière du moyen d'éclairage est émise par le moyen d'éclairage à travers le canal de guidage de la lumière sur l'élément optique, la gaine étant de préférence conçue de manière à être opaque à la lumière.

11. Dispositif d'éclairage (1) selon l'une quelconque des revendications précédentes, dans lequel l'élément d'engagement (6) comporte trois ou plusieurs évidements d'encliquetage (6a, 6b, 6c).

12. Dispositif d'éclairage (1) selon l'une des revendications précédentes, dans lequel l'élément optique (2) est conçu comme une lentille.

13. Dispositif d'éclairage (1) selon l'une des revendications précédentes, dans lequel un diaphragme est disposé entre le moyen d'éclairage et l'élément optique (2), le diaphragme étant de préférence situé dans le plan de l'image lumineuse.

14. Dispositif d'éclairage (1) selon l'une quelconque des revendications précédentes, dans lequel l'élément de compensation (4) présente un premier coefficient de dilatation thermique, l'élément optique (2) présente un deuxième coefficient de dilatation thermique et le dispositif de maintien (3) présente un troisième coefficient de dilatation thermique, le premier coefficient de dilatation thermique étant différent des deuxième et troisième coefficients de dilatation thermique.

15. Projecteur de véhicule automobile comprenant un dispositif d'éclairage (1) selon l'une quelconque des revendications précédentes.
